# EUROPEAN PATENT SPECIFICATION

(11) **EP 3 413 768 B1**
(45) Date of publication and mention of the grant of the patent: **08.04.2020**
(21) Application number: 17703753.8
(22) Date of filing: 07.02.2017
(51) Int. Cl.: A47J 43/12, A47J 43/044

(54) **KITCHEN APPLIANCE DRIVE UNIT, KITCHEN APPLIANCE AND ATTACHMENT**
KÜCHENGERÄTANTRIEBSEINHEIT, KÜCHENGERÄT UND ZUSATZGERÄT
UNITÉ DE COMMANDE POUR APPAREIL ÉLECTROMÉNAGER, APPAREIL ÉLECTROMÉNAGER ET FIXATION

(30) Priority: 08.02.2016 EP 16154667
(43) Date of publication of application: 19.12.2018
(73) Proprietor: Koninklijke Philips N.V., 5656 AG Eindhoven (NL)
(72) Inventor: STARMANS, Jozef, Marie, 5656 AE Eindhoven (NL); EBERHART, Ingolf, Ronald, 5656 AE Eindhoven (NL); SARI, Mehmet, 5656 AE Eindhoven (NL); SMOLE, Philipp, 5656 AE Eindhoven (NL); SAMONIGG, Gert, 5656 AE Eindhoven (NL); WEISS, Sascha, 5656 AE Eindhoven (NL)
(74) Representative: Freeke, Arnold
(86) International application number: PCT/EP2017/052661
(87) International publication number: WO 2017/137401

(56) References cited:
- CN-U- 202 589 334
- DE-A1-102007 054 276
- DE-B- 1 156 031
- DE-C1- 10 060 996
- US-A- 536 136
- US-A- 966 574

## Description

### FIELD OF THE INVENTION

The present invention relates to a kitchen appliance drive unit comprising a housing including a drive mechanism and a rotary member driven by the drive mechanism.

The present invention further relates to a kitchen appliance including such a kitchen appliance drive unit.

The present invention further relates to an attachment for such a kitchen appliance drive unit.

### BACKGROUND OF THE INVENTION

Nowadays, kitchen appliances such as a hand blender or a mixer exist to which an attachment for generating an air flow may be attached, for example to inject air into a food product such as to create an aerated food product, e.g. a mousse or foam or the like, or to extract air from the food product or a container containing the food product, e.g. to create a vacuum within the container in order to preserve the food product.

EP 1 339 608 B discloses a rotary powered vacuum pump as an attachment for a conventional electrical kitchen appliance, and especially a rod mixer or hand stirrer. A shaft coupling is fitted to the appliance drive shaft to operate the vacuum pump. The vacuum pump is a vane pump, with a rotor, and radial projecting blades against the inner wall of a graphite ring.

DE 102007054276 A1 discloses an injector that has a continuous hollow pipe which is open at an upper end and a lower end of the pipe. The upper end of the hollow pipe stays in connection with an atmosphere. The lower end of the hollow pipe is guided to a cutting rotor of a hand-held mixer and is terminated at a small distance to a cutter. Holders attach the injector at the mixer such that a direct contact with the cutter of the cutting rotor is avoided, where the injector exhibits a same height as the mixer. The holders are detached to separate the injector from the mixer.

A drawback of such attachments is that the air flow produced by the attachments is typically monodirectional such that different attachments are required for aeration and vacuum generation. Moreover, attachments for generating a vacuum in a food storage container are typically incapable of delivering a rotary food processing action such as a cutting or mixing action.

### SUMMARY OF THE INVENTION

The present invention seeks to provide a more versatile kitchen appliance drive unit.

The present invention further seeks to provide a kitchen appliance comprising such a drive unit.

The present invention further seeks to provide an attachment for such a drive unit.

According to the invention, there is provided a kitchen appliance drive unit comprising a housing, a drive mechanism in the housing; a rotary member driven by the drive mechanism; a first opening; a second opening; and a fluid pump driven by the drive mechanism and being fluidly connected to the first and second openings, the fluid pump being arranged, in a first mode of operation, to displace a fluid from the first opening to the second opening, the fluid pump also being arranged, in a second mode of operation, to displace a fluid from the second opening to the first opening.

By providing a fluid pump within the housing of such a drive unit, a combined rotary action and fluid flow action may be delivered to a food product or container, thereby providing a versatile kitchen appliance drive unit. The kitchen appliance drive unit may be a handheld drive unit or may be a surface-mounted drive unit.

The drive mechanism may be a manual drive mechanism or alternatively the drive mechanism may comprise an electric motor.

Preferably, the direction of the fluid flow produced by the fluid pump is configurable such that the rotary action provided by the rotary member may be combined with a liquid or gas supply, e.g. for aeration purposes, or may be combined with liquid or vacuum suction depending on the chosen configuration to further increase the versatility of the kitchen appliance drive unit. To this end, the kitchen appliance drive unit may further comprise a directional control valve, wherein the first and second openings are fluidly connected to the fluid pump via the directional control valve, or the rotation direction of the fluid pump (clockwise or anti-clockwise) may be configurable.

Alternatively or additionally, the kitchen appliance drive unit may further comprise a user interface for selecting an fluid displacement direction of the fluid pump.

The fluid pump may be driven by the drive mechanism in any suitable manner. In an embodiment, a drive shaft may extend through the fluid pump, the fluid pump being driven by the electric motor via the drive shaft.

In a particularly suitable embodiment, the fluid pump is configurably coupled to the drive shaft by a coupling member configurable between a first configuration in which the fluid pump is engaged with the drive shaft and a second configuration in which the fluid pump is disengaged from the drive shaft. This has the advantage that the fluid pump may be disengaged when the fluid flow action is not required, which for instance reduces the power consumption of the kitchen appliance drive unit.

The fluid pump may be coupled to the drive mechanism via a gearbox in order to ensure that the fluid pump is operated at the desired rotations per minute (rpm). The gear box may be integral to the fluid pump, with a drive shaft being coupled to the electric motor via the gear box. This provides a kitchen appliance drive unit having relatively few separate components, which is therefore easily assembled. This reduces the cost of the drive unit. In an embodiment, the fluid pump comprises a stator that is radially adjustable. This has the advantage that the performance of the fluid pump may be adjusted during operation. To this end, the kitchen appliance drive unit may comprise a user interface including a control button or the like for controlling the radial position of the stator of the fluid pump.

In some embodiments, the rotary member of the kitchen appliance drive unit is designed to process food products, for example, the rotary member may be a cutting blade arrangement, a whisking arrangement, a mixing blade arrangement or the like. In these embodiments, the first opening is typically located in the vicinity of the rotary member such that a liquid or a gas such as air may be delivered to or sucked away from a volume including the food product.

Alternatively, the rotary member and at least one of the first and second openings are arranged to interface with an attachment to the drive unit. This has the advantage that different attachments may be used for different food processing tasks, thereby further increasing the versatility of the kitchen appliance drive unit.

According to another aspect, there is provided a kitchen appliance comprising a kitchen appliance drive unit including a housing; a drive mechanism in the housing; a rotary member driven by the drive mechanism; a first opening; a second opening; and a fluid pump driven by the drive mechanism and being fluidly connected to the first and second openings to displace fluid from the second opening to the first opening; a first and second attachment each having a drive unit interface for interfacing with the drive unit, and a duct extending from the drive unit interface positionable within a food processing region, the arrangement being such that when the drive unit interface of the first attachment is interfaced with the drive unit, the duct communicates the first opening with the food processing region so that fluid is supplied along the duct in a direction towards said food processing region and, when the drive unit interface of the second attachment is interfaced with the drive unit, the duct communicates the second opening with the food processing region so that fluid is drawn in a direction away from said food processing region along the duct.

In an embodiment, the drive unit and the first and second attachments are arranged so that the second opening is open to atmosphere when the drive unit interface of the first attachment is interfaced with the drive unit, and so that the first opening is open to atmosphere when the drive unit interface of the second attachment is interfaced with the drive unit.

The attachment may further comprise a unidirectional restrictor valve in said duct in order to prevent fluid flowing through the duct in an undesirable direction.

The kitchen appliance may be a blender or a hand blender although embodiments of the present invention are not limited to such kitchen appliances.

According to yet another aspect, a kitchen appliance drive unit according to the invention is provided with an attachment that comprises a drive unit interface optionally including a further rotary member for interfacing with the rotary member of the kitchen appliance drive unit, a food product processing interface optionally including a rotary food processing member coupled to the further rotary member by a further drive shaft; and a duct extending from the drive unit interface to the food product processing interface, wherein the duct is arranged to be fluidly coupled to an opening of the at least one opening.

### BRIEF DESCRIPTION OF THE DRAWINGS

Embodiments of the invention are described in more detail and by way of non-limiting examples with reference to the accompanying drawings, wherein:
FIG. 1 schematically depicts a kitchen appliance drive unit according to an embodiment;
FIG. 2 schematically depicts an attachment for the kitchen appliance drive unit of FIG. 1 according to an embodiment;
FIG. 3 schematically depicts another attachment for the kitchen appliance drive unit of FIG. 1 according to an embodiment;
FIG. 4 schematically depicts yet another attachment for the kitchen appliance drive unit of FIG. 1 according to an embodiment;
FIG. 5 schematically depicts a kitchen appliance drive unit according to another embodiment;
FIG. 6 schematically depicts a kitchen appliance drive unit according to yet another embodiment;
FIG. 7 schematically depicts a kitchen appliance drive unit according to still another embodiment;
FIG. 8 schematically depicts a kitchen appliance drive unit according to yet another embodiment;
FIG. 9 schematically depicts a kitchen appliance drive unit according to yet another embodiment;
FIG. 10 schematically depicts a kitchen appliance drive unit according to yet another embodiment;
FIG. 11 schematically depicts a kitchen appliance drive unit according to yet another embodiment;
FIG. 12 schematically depicts a kitchen appliance drive unit according to yet another embodiment;
FIG. 13 schematically depicts a kitchen appliance drive unit according to yet another embodiment;
FIG. 14 schematically depicts a kitchen appliance drive unit according to yet another embodiment;
FIG. 15 schematically depicts a kitchen appliance drive unit according to yet another embodiment; and
FIG. 16 schematically depicts a kitchen appliance drive unit according to yet another embodiment.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

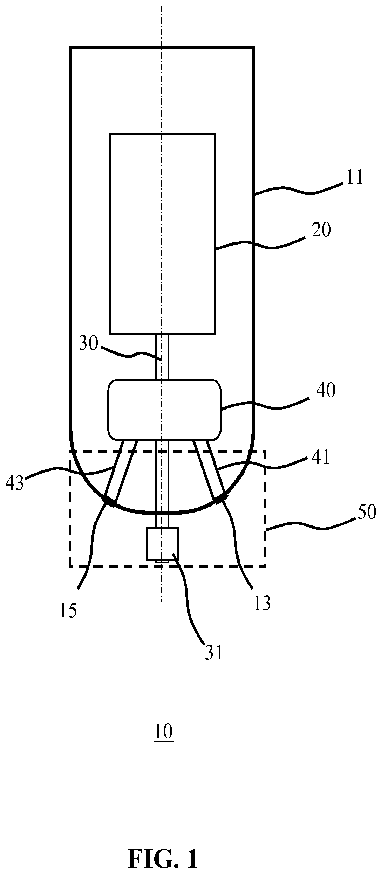

FIG. 1 schematically depicts a kitchen appliance drive unit 10 (from here on simply referred to as drive unit 10) according to an embodiment of the present invention. The drive unit 10 comprises a housing 11, which housing may have any suitable shape and may be made of any suitable material, e.g. a plastics material, a metal, a metal alloy or any suitable combination thereof. Although not specifically shown, the housing 11 may comprise a gripping member for gripping the drive unit 10, e.g. in case of the drive unit 10 being a hand-held drive unit 10. The gripping member may be integral to the housing 11, e.g. a plurality of finger-shaped channels in the housing 11, or may be attached to the housing, e.g. a ribbed rubber sleeve or the like.

The housing 11 typically houses an electromotor or electric motor 20 arranged to drive a drive shaft 30, which drive shaft 30 in FIG. 1 is directly coupled to the electric motor 20 by way of non-limiting example only. As will be explained in more detail below, it is equally feasible that the drive shaft 30 is indirectly coupled to the electric motor 20, e.g. via a gear box or the like. The drive shaft 30 comprises a rotary member 31 external to the housing 11. The rotary member 31 may be designed to interact directly with a food product through rotation of the drive shaft 30. In such embodiments, the rotary member 31 may be a food processing member such as a cutting blade assembly, whisking assembly, stirring assembly or the like. Alternatively, the rotary member 31 may form part of an interface region 50 of the drive unit 10 for interfacing with an attachment to the drive unit 10, in which case the rotary member 31 may be adapted to interface with a further drive shaft or the like of the attachment in order to power a food processing member on the further drive shaft. The drive unit 10 further comprises a fluid pump 40 such as a liquid pump, a gas pump such as an air pump or the like within the housing 11, which fluid pump 40 is driven by the electric motor 20. For example, the fluid pump 40 may be a rotary vane pump directly driven by the drive shaft 30, or may be indirectly driven through a gear box (not shown) coupled to the drive shaft through a crown wheel or the like. In some embodiments, the gear box may be integral to the fluid pump 40. Where the fluid pump 40 is driven by such a gear box, the fluid pump 40 for example may be a diaphragm or plunger pump. The fluid pump 40 is fluidly connected to a first opening 13 in the housing 11 by a first duct 41. The fluid pump 40 is further fluidly connected to a second opening 15 in the housing 11 by a second duct 43. The fluid pump 40 is arranged to displace gas or liquid between the first opening 13 and the second opening 15, that is, from the first opening 13 to the second opening 15 or from the second opening 15 to the first opening 13. The fluid pump 40 is typically arranged to deliver pressurized gas or liquid to one of the first opening 13 and the second opening 15. In a preferred embodiment, the fluid flow direction of the fluid pump 40 is configurable, that is, the fluid pump 40 may be operated in a first configuration in which the fluid pump 40 is arranged to displace fluid from the first opening 13 to the second opening 15 and in a second configuration in which the fluid pump 40 is arranged to displace fluid from the second opening 15 to the first opening 13. The drive unit 10 may comprise a user interface (not shown) adapted to select the desired configuration of the fluid pump 40.

In FIG. 1, the first opening 13 and the second opening 15 are arranged in the interface region 50 such that fluid may be provided to the fluid pump 40 through an attachment interfacing with the drive unit 10, with the fluid pump 40 arranged to deliver fluid to the attachment via the interface region 50. However, as will be explained in further detail below, other arrangements are equally feasible, such as an arrangement in which only the first opening 13 is located in the interface region 50. Although not specifically shown. The first opening 13 may extend beyond the housing 11, e.g. may form part of an external duct or tube for sucking fluid from or delivering fluid to a volume in which the rotary member 31 is present. This for instance is particularly relevant in case of a motored unit 10 in which the rotary member 31 is arranged to interact directly with the food product, i.e. is a food processing member, such that the drive unit 10 may simultaneously impart a rotary food processing action and a fluid displacement action upon the food product to be processed.

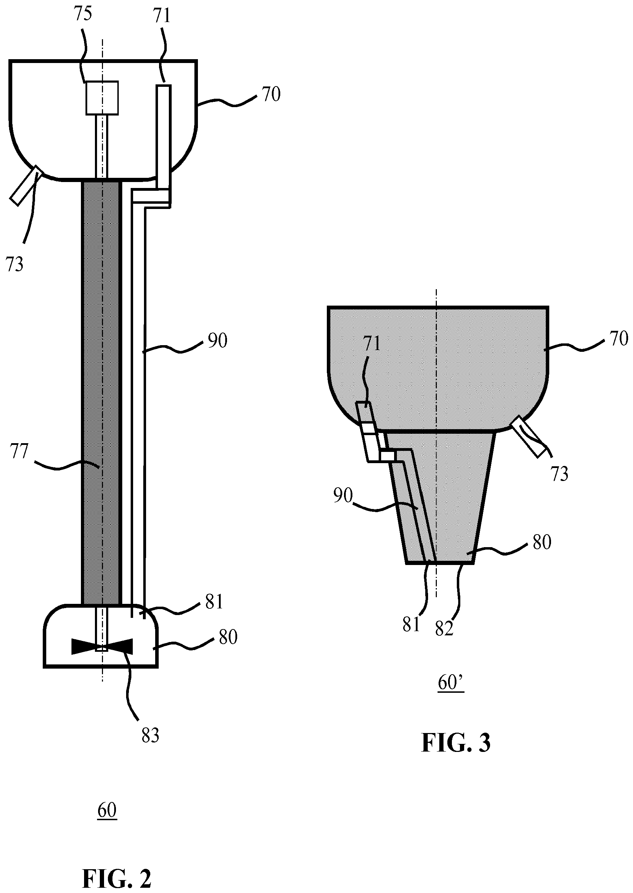

FIG. 2 schematically depicts an example embodiment of an attachment 60 for interfacing with the drive unit 10. The attachment 60 in FIG. 2 is a blender bar comprising a further interface region 70 adapted to interface with the interface region 50 of the drive unit. For example, the further interface region 70 may delimit a cavity having an inner surface dimensioned to match the outer surface of the interface region 50. The interface region 50 may comprise at least one mating member arranged to mate with a further mating member of the further interface region 70, e.g. to lock the attachment 60 to the drive unit 10 by a clicking or twisting action for example. Such mating arrangements are well-known per se and are therefore not explained in further detail for the sake of brevity only. It suffices to say that any suitable mating arrangement between the drive unit 10 and any of its attachments 60 may be contemplated.

The blender bar comprises a drive shaft 77 extending from the further interface region 70 to a food processing region 80. In the further interface region 70, the drive shaft 77 comprises a further rotary member 75 for interfacing with the rotary member 31 of the drive unit 10. For example, the rotary member 31 may comprise a plurality of ribs for interfacing with matching grooves on the further rotary member 75 or vice versa. Other suitable interface arrangements will be immediately apparent to the skilled person. In the food processing region 80, the drive shaft 77 comprises a food processing member 83. In the attachment 60 in FIG. 2, the food processing member 83 comprises a cutting blade arrangement although other food processing members, e.g. a whisk, mixing blade or the like, are equally feasible. In case of the food processing member 83 comprising a cutting blade arrangement, the food processing region 80 may comprise a protective cover, e.g. a bar cage or the like, around the cutting blade arrangement to shield the cutting blade arrangement from direct exposure to a foreign object. Such a cover may comprise one or more slits or the like to facilitate the displacement of food from the volume delimited by the cover through the one or more slits or the like.

The blender bar further comprises a duct 90 extending between a first further opening 71 in the further interface region 70 and a second further opening 81 in the food processing region 80. The first further opening 71 is arranged to mate with the first opening 13 in the housing 11 of the drive unit 10 such that the fluid pump 40 can displace fluid through the duct 90 from or towards the food processing region 80. For example, the fluid pump 40 may be arranged to deliver pressurized air to the food processing region 80 through the duct 90 such that a food product being blended by the food processing member 83 may be aerated at the same time with the pressurized air, for example to create a froth or foam.

The blender bar may further comprise a further opening 73 in the further interface region 70. This further opening 73 for example may act as an air inlet in case the drive unit 10 sucks air into the fluid pump 40 through the second opening arranged in the interface region 50 of the drive unit 10. In this arrangement, the fluid pump 40 sucks in air through the attachment 60.

The blender bar may be made from any suitable material; for example, at least some parts of the blender bar may be made of plastic, such as the housing of the blender bar. Alternatively or additionally, at least some parts of the blender bar may be made of a metal or metal alloy, such as the food processing member 83 of the blender bar.

FIG. 3 schematically depicts another example attachment 60', here a vacuum-suction attachment. In the attachment 60', the first further opening 71 of the duct 90 is again arranged to interface with the first opening 13 of the drive unit 10, but in this embodiment the fluid pump 40 is arranged to displace air from the first opening 13 towards the second opening 15, i.e. the first opening 13 acts as the air inlet of the fluid pump 40. Consequently, due to the interfacing between the duct 90 and the first opening 13, air is sucked from the food processing region 80 of the attachment 60' through its second further opening 81, which air is expelled by the fluid pump 40 in compressed form through the second opening 15 in the housing 11 of the drive unit 10. In this embodiment, the further opening 73 in the attachment 60' may be used as an air outlet through which the pressurized air generated by the fluid pump 40 is expelled to the ambient. It will also be appreciated that the direction of flow of fluid generated by the fluid pump 40 may be the same in the embodiments illustrated in both Figures 2 and 3, i.e. fluid may flow in a direction from the second opening 15 towards the first opening 13. In this case, in the embodiment of Figure 2 in which the duct 90 is in communication with the first opening 13, fluid passes downwardly along the duct 90 towards the food processing region 80 whereas, in the embodiment of Figure 3 in which the duct 90 is in communication with the second opening 15, fluid is drawn upwardly along the duct 90 away from the food processing region 80.

The food processing region 80 may take the shape of a tube or the like, which may be used to interface with food storage containers such as storage boxes, storage bags, sealing devices or the like in which a food product may be vacuumized. To this end, the food processing region 80 comprise an air inlet 82, with the second further opening 81 of the duct 90 forming part of or being in fluid communication with the air inlet 82. As before, the attachment 60' may be made from any suitable material; a plastics material is particularly preferred for this embodiment. As will be readily understood, the attachment 60 does not employ a rotary food processing action, i.e. does not interface with the rotary member 31. The further interface region 70 of the attachment 60' may contain a void space in which the rotary member 31 can freely rotate during vacuumizing a food storage container as explained above.

Alternatively a section of the housing 11 of the drive unit 10 may be designed to interface with a food storage container directly. In this embodiment, no extra attachment is required in order for the drive unit 10 to interface with the food storage container.

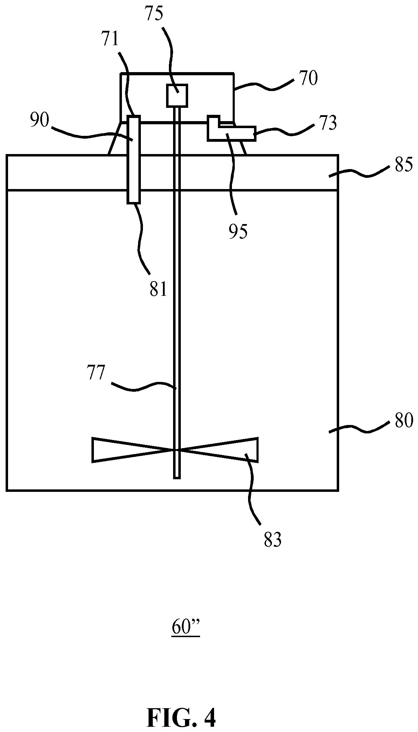

FIG. 4 schematically depicts another example attachment 60", here a food chopper. The further interface region 70 of the food chopper may form part of a lid 85 that fits the food processing region 80, here a bowl or other suitable container, which may have a circular or polygonal outline. As before, the drive shaft 77 extends from the further interface region 70 into the food processing region 80. In the further interface region 70, the drive shaft 77 comprises a further rotary member 75 for interfacing with the rotary member 31 of the drive unit 10. In the food processing region 80, the drive shaft 77 comprises a food processing member 83 such as a cutting blade assembly for example. The duct 90 including the first further opening 71 and the second further opening 81 extends from the further interface region 70 into the food processing region 80. The further opening 73 in the further interface region 70 may terminate into the ambient, i.e. outside the container forming the food processing region 80. For example, the further opening 73 may form part of a further duct 95 extending from the further interface region 70 to the ambient. The further opening 73 may be arranged to interface with the second opening 15 in the housing 11 of the drive unit 10. In this embodiment, the fluid pump 40 may be arranged to suck air from the bowl of the food chopper such that the food is chopped by the food processing member 83 under vacuum conditions, or at least under low oxygen conditions, for example to prevent or delay oxidation of the food product during processing. Alternatively, the fluid pump 40 may be arranged to add a liquid such as an edible oil to the food product whilst processing the food product, e.g. by chopping, to produce a homogeneously processed and smooth food product. As before, the food chopper may be made of any suitable material, e.g. a plastics material, a metal, a metal alloy or any suitable combination thereof. In particular, the bowl may be made of a plastics material to make the bowl light-weight and dishwasher safe.

Although not explicitly shown in FIG. 2-4, the duct 90 in the attachments 60, 60', 60" may comprise a unidirectional restrictor valve or one-way valve such that air can flow through the duct 90 in only one direction. In this manner, it can be prevented that a kitchen appliance comprising the kitchen appliance drive unit 10 and such an attachment is operated incorrectly, i.e. operate with the fluid pump 40 displacing fluid through the duct 90 in an opposite direction to the intended direction. Such a unidirectional restrictor valve may be located in any suitable location of the duct 90.

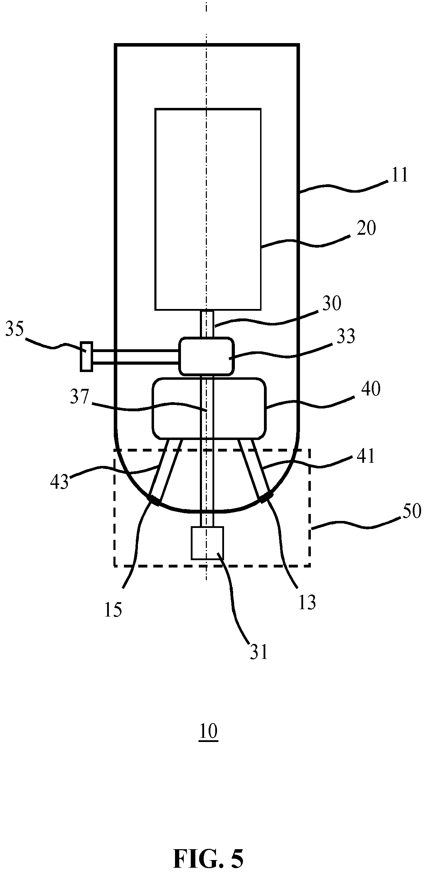

In FIG. 1, the fluid pump 40 is permanently coupled to the electric motor 20, such that the fluid pump 40 is always on when the electric motor 20 is engaged. FIG. 5 schematically depicts an alternative embodiment of the drive unit 10 in which the drive unit as shown in FIG. 5 has been altered by the inclusion of a clutch 33 between the drive shaft 30 and the rotor of the fluid pump 40 to alter the connection between the shaft 30 and the rotor of the fluid pump 40 into a slide bearing. The clutch 33 may be operated by a user control 35 such as a slide button or the like. The user control 35 is configured to activate or deactivate the clutch 33 such that the fluid pump 40 can be switched on or off respectively.

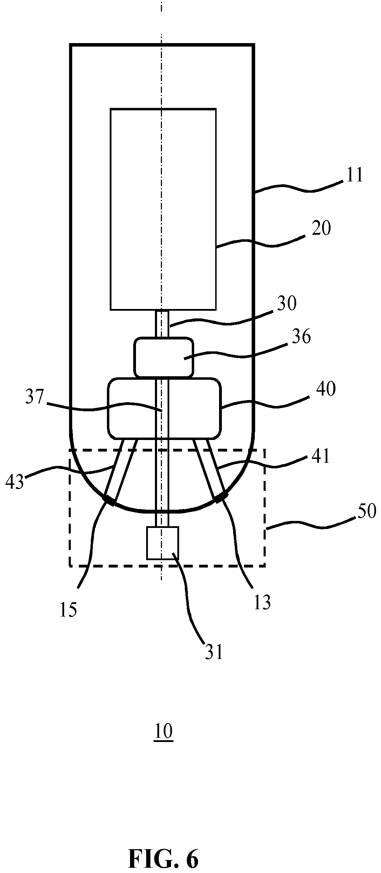

FIG. 6 schematically depicts an alternative embodiment of the drive unit 10, in which the drive shaft 30 and the rotor of the fluid pump 40 are connected through a slide bearing including a gear box 36 such as planetary gears or any other suitable type of gear box. A user control (not shown) may be provided on the housing 11 of the drive unit 10, e.g. as part of a user interface or as a stand-alone control, which user control may be used to change the gears of the gear box 36, thereby altering the rotation speed of the rotor of the fluid pump 40, e.g. the rotor of a rotary vane pump. In this manner, the performance of the fluid pump 40, e.g. the air flow speed produced by the fluid pump 40, may be adjusted by controlling the gear box 36 accordingly.

In an embodiment, the gear box 36 may form an integral part of the fluid pump 40. In this embodiment, the gear box 36 may be driven by the drive shaft 30 or alternatively may be driven by the electric motor 20, with the drive shaft 30 being driven indirectly through the gear box 36.

Other embodiments for adjusting the performance (fluid flow) of the fluid pump 40 may be contemplated. For example, the fluid pump 40 may have a radially adjustable stator under control of a user control, e.g. a screw adjustment, button, switch, lever or the like, or a motion converter responsive to a user interface. Such a radially adjustable stator for example may be made of a wear-resistant material such as a PTFA-filled plastic, a metal, a metal alloy and so on. In this embodiment, the ducting between the fluid pump 40 and the first opening 13 and second opening 15 respectively in the housing 11 may be flexible ducting, e.g. flexible polymer ducting such as rubber ducting in order to facilitate the stator movement.

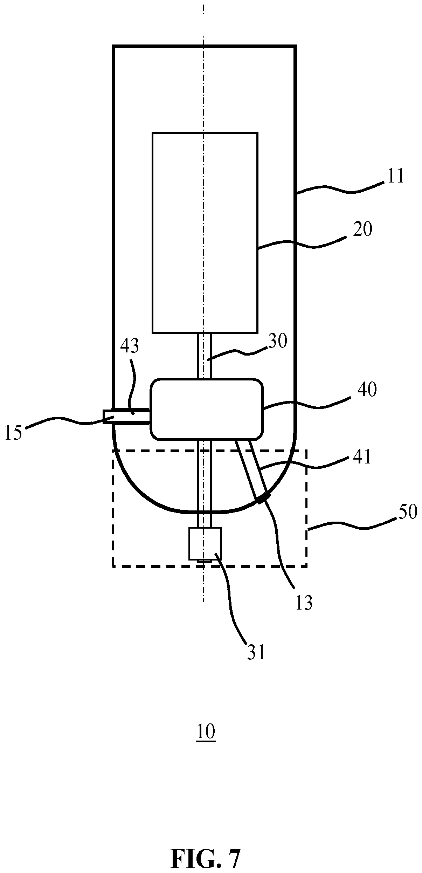

FIG. 7 schematically depicts another embodiment of the drive unit 10 in which the second opening 15 is arranged outside the interface region 50, and is instead directly connected to the ambient of the housing 11. In this embodiment, only the first opening 11 is arranged to interface with an attachment to the drive unit 10 in case the rotary member 31 is an interface member as previously explained. In this embodiment, the rotary direction of the fluid pump 40 may be configurable, e.g. through a user interface or a dedicated user control such as a button, switch, lever or the like, such that the fluid pump 40 may be configured between a first configuration, i.e. a first rotation direction, in which fluid is sucked into the housing through ambient opening 15 such that pressurized fluid is delivered to the attachment through the first opening 13 in the interface region 50 and a second configuration, i.e. a second rotation direction, in which fluid is sucked into the housing through the attachment via the first opening 13 in the interface region 50 and pressurized air is expelled by the fluid pump 40 through the ambient opening 15 in the housing 11. In this embodiment, the further opening 73 in the various example attachments 60, 60', 60" may be omitted. In this embodiment, in order to prevent fluid being pumped through the duct 90 in the wrong direction, the duct 90 may comprise a unidirectional restrictor valve or one-way valve as previously explained. Such a valve for example may be located at the first further opening 71 arranged to interface with the first opening 13 in the housing 11 of the drive unit 10. Alternatively, the attachment may comprise an arrangement that informs the drive unit 10 which rotation direction of the fluid pump 40 should be selected. For example, the attachment may or may not comprise an adapter, which adapter may form part of the mating arrangement between the attachment and the drive unit 10. In case of the adapter being present, a first rotation direction of the fluid pump 40 is selected by virtue of the interaction between the adapter and the interface region 50, whereas in case of the adapter being absent a second rotation direction of the fluid pump 40 is selected.

In another embodiment, the attachments may include a near-field communication transmitter adapted to communicate with a near-field communication receiver in the drive unit 10. The near-field communication transmitter may be adapted to transmit a signal indicative of the required rotation direction of the fluid pump 40, such that the drive unit 10 may configure the rotation direction of the fluid pump 40 in response to the near-field communication receiver receiving this signal.

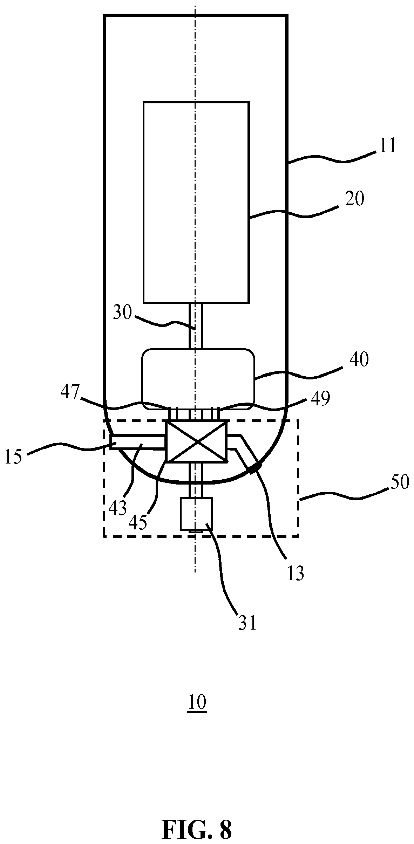

FIG. 8 schematically depicts an embodiment of the drive unit 10 in which the fluid pump 40 is a monodirectional fluid pump. In this embodiment, the housing 11 further contains a directional control valve 45 such as a poppet valve or a 4-way/4-port valve. The first opening 41 and the second opening 43 are fluidly connected to the fluid pump 40 via the directional control valve 45. The directional control valve 45 may be fluidly connected to the fluid pump 40 in any suitable manner, for example via a first further duct 47 and a second further duct 49. The directional control valve 45 may be configured between a first configuration in which the fluid inlet of the fluid pump 40 is fluidly connected to the first opening 13 and the fluid outlet of the fluid pump 40 is fluidly connected to the second opening 15 and a second configuration in which the fluid inlet of the fluid pump 40 is fluidly connected to the second opening 15 and the fluid outlet of the fluid pump 40 is fluidly connected to the first opening 13. The directional control valve 45 may be user-controlled, e.g. through a user interface or a dedicated user control, e.g. a button, switch, lever or the like, or may be controlled through a mechanical or electrical interaction with an attachment, e.g. by the attachment providing an NFC signal as previously explained.

As previously explained, the drive unit 10 may be a stand-alone unit in which the rotary member 31 comprises a food processing member or may be part of a kitchen appliance including one or more attachments for interfacing with the drive unit 10 in which case the rotary member 31 comprises an interface member for interfacing with an optional further rotary member 75 of the interface. In some embodiments, such an attachment may interface with the fluid pump 40 of the drive unit 10 only, in which embodiments such an attachment typically comprises a duct or the like extending from an interface region of the attachment with the drive unit 10 to a food processing region where the attachment is brought into contact with a food product or food product packaging as previously explained. The kitchen appliance consisting of the kitchen appliance drive unit 10 or comprising the drive unit 10 and one or more further attachments may be a food processor. In some embodiments, such a kitchen appliance may be a surface-mounted blender or a hand-held blender.

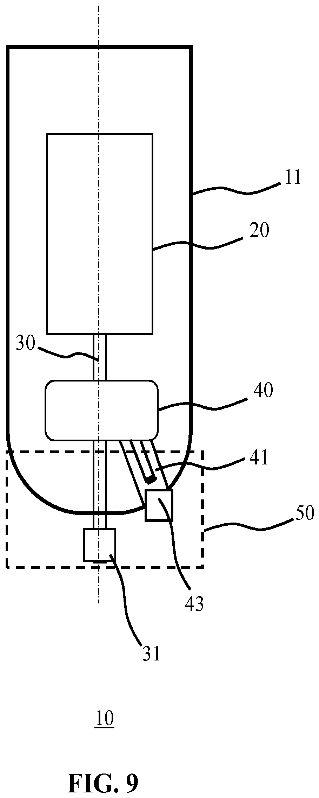

In some of the above embodiments, the housing 11 comprises a first opening 41 separate to the second opening 43 by way of non-limiting example. FIG. 9 schematically depicts a cross-section of an alternative embodiment of the kitchen appliance drive unit 10 in which the first opening 41 is contained within the second opening 43 such that the housing 11 comprises a single opening in fluid communication with the fluid pump 40 only. It is of course equally feasible that the second opening 43 is contained within the first opening 41 instead; this is not explicitly shown for the sake of brevity only.

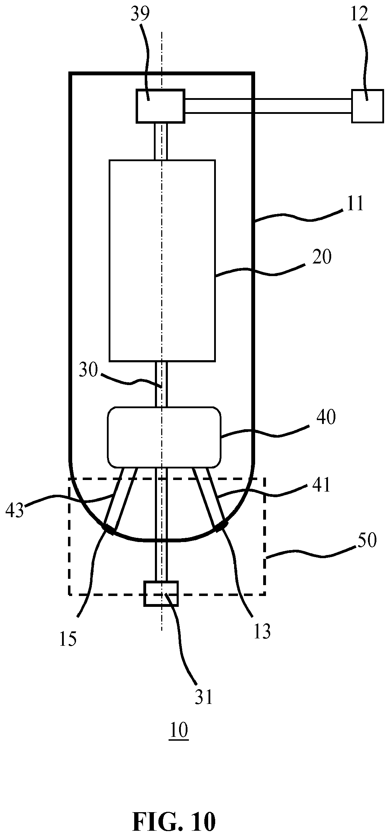

In the above embodiments of the kitchen appliance drive unit 10, the drive mechanism of the drive unit 10 comprises an electric motor 20 for driving the fluid pump 40 and rotary member 30. FIG. 10 schematically depicts a cross-section of an alternative embodiment in which the electric motor 20 of the drive mechanism is replaced by a hand-driven drive mechanism. In this embodiment, a hand-driven crank 12 or the like that extends through the housing 11 may be provided, which crank 12 may be coupled to a gear box 39 driving the rotary member 31 and fluid pump 40 through the drive shaft 30, i.e. the drive shaft 30 is driven by the gear box 39, with the rotary member 31 and fluid pump 40 being driven by the drive shaft 30.

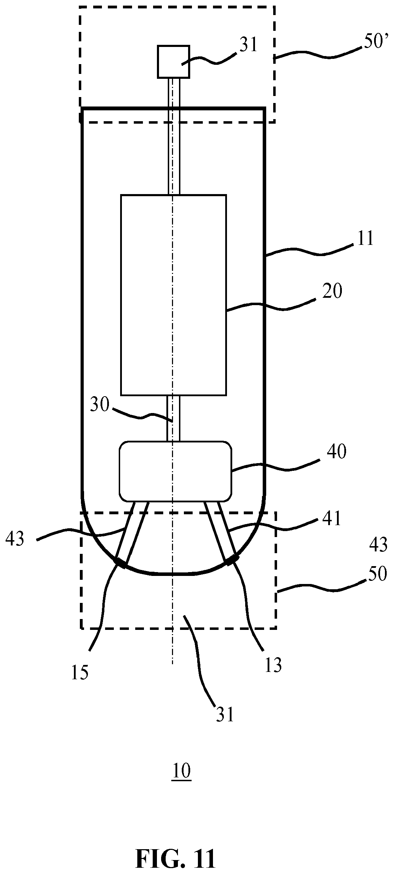

In the above embodiments, the kitchen appliance drive unit 10 comprises a single interface region 50 comprising the rotary member 31 and the inlet and/or outlet to the fluid pump 40. FIG. 11 schematically depicts a cross-section of an alternative embodiment in which the kitchen appliance drive unit 10 comprises a first interface region 50 and a second interface region 50' at opposite ends of the housing 11, with the first interface 50 comprising the inlet and/or outlet to the fluid pump 40 and the second interface 50' comprising the rotary member 31. In this embodiment, the kitchen appliance drive unit 10 may comprise a single drive shaft 30 extending through the electric motor 20 the drives both the rotary member 31 and the fluid pump 40 or alternatively may comprise separate drive shafts extending from opposite ends of the electric motor 20, which separate drive shafts respectfully drive the rotary member 31 and the fluid pump 40.

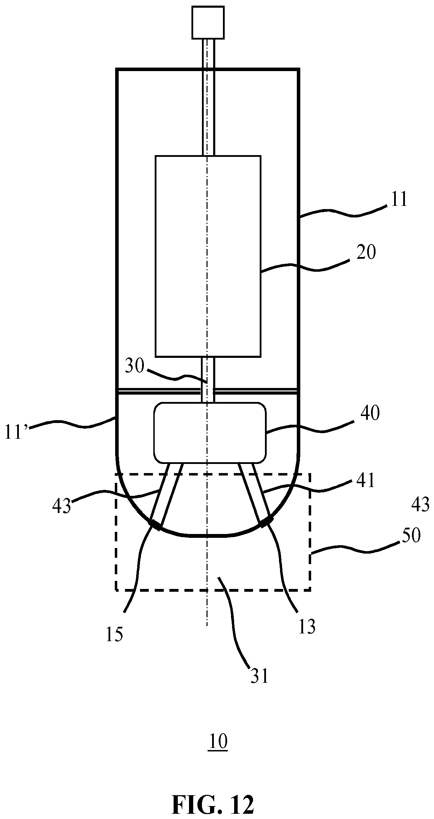

FIG. 12 schematically depicts a cross-section of yet another embodiment of the kitchen appliance drive unit 10. In this embodiment, the single housing 11 of the kitchen appliance drive unit 10 of FIG. 11 has been replaced by a first housing 11 in which the electric motor 20 is housed and a second housing 11' in which the fluid pump 40 is housed. The second housing 11' preferably is permanently affixed to the first housing 11. This embodiment has the advantage that the motor-containing housing 11 and the fluid pump-containing housing 11' may be separately manufactured and subsequently assembled, which may simplify the assembly process.

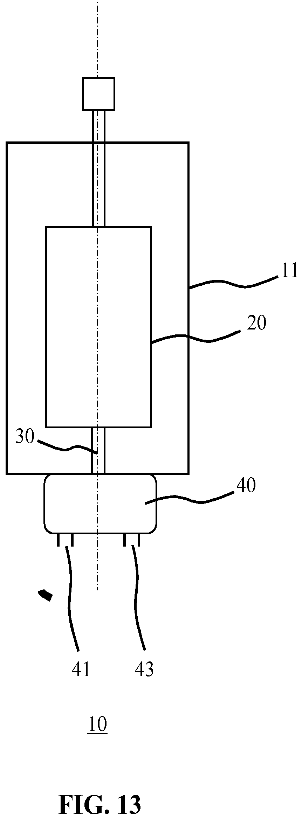

FIG. 13 schematically depicts a cross-section of yet another embodiment of the kitchen appliance drive unit 10. In this embodiment, the kitchen appliance drive unit 10 as shown in FIG. 11 has been adapted by the fluid pump 40 being external to the housing 11. The fluid pump 40 in this embodiment is abutted to the housing 11 instead, which may be advantageous as it allows for a smaller housing 11, thereby reducing overall cost of the kitchen appliance drive unit 10.

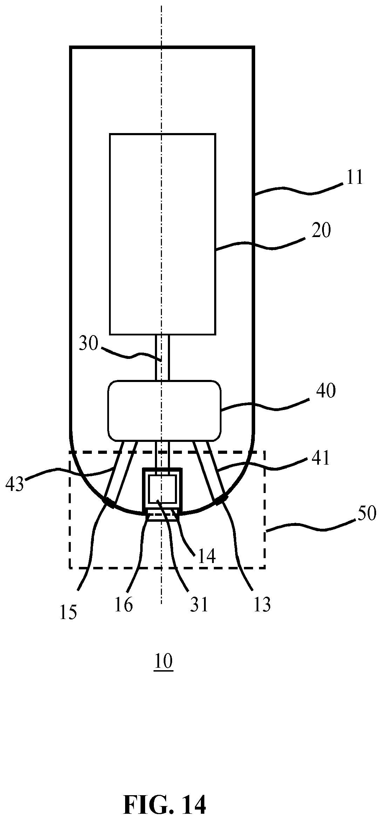

FIG. 14 schematically depicts a cross-section of yet another embodiment of the kitchen appliance drive unit 10. In this embodiment, the rotary member 31 is located within a recess 14 of the housing 11, which recess 14 optionally may be closed off by a flap 16. In this embodiment, an attachment may interface with the rotary member 31 by the attachment comprising a further rotary member adapted to extend into the recess 14, which may involve pushing the flap 16 inwardly or outwardly in order to access the recess 14. Although the kitchen appliance drive unit 10 in this embodiment is shown to have a single interface region 50, it will be immediately understood by the skilled person that this embodiment is equally applicable to the above embodiments of the kitchen appliance drive unit 10 having respective interface regions at opposite sides of the housing 11.

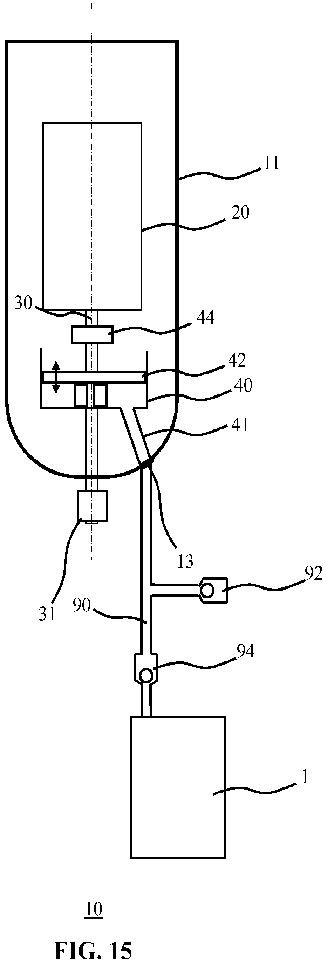

FIG. 15 schematically depicts a cross-section of an embodiment of the kitchen appliance drive unit 10 in which the housing 11 comprises a single opening 13 in fluid communication with the fluid pump 40 through duct 41 only. In this embodiment, the fluid pump 40 comprises a piston or membrane 42 driven by a motion converter 44 on the drive shaft 30. In this embodiment, the duct 90 of the attachment to the kitchen appliance drive unit may comprise at least one vent, such as a first vent 92 and a second vent 94 through which air evacuated from a food storage container 1, e.g. a storage bag or the like is evacuated. In this embodiment, the duct 90 may include a one-way valve or the like that allows air from the food storage container 1 to be sucked into the fluid pump 40 upon the volume of the fluid pump 40 increasing but blocks air from the fluid pump 40 to return to the food storage container 1 upon the volume of the fluid pump 40 decreasing. Instead, the air expelled from the fluid pump 40 may be forced to ambient through the first vent 92 and/or the second vent 94. The ducting including the at least one vent may form an integral part of an attachment to the kitchen appliance drive unit 10 or alternatively may form an interface between such an attachment and the kitchen appliance drive unit 10.

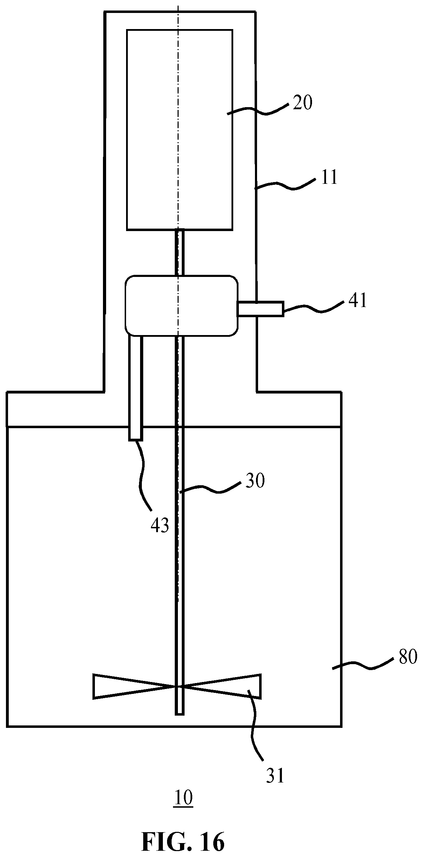

FIG. 16 schematically depicts a cross-section of an embodiment of the kitchen appliance drive unit 10 in which the housing 11 forms the lid of a food chopper, with the food chopper further comprising a removable collection bowl 80 designed to engage with the lid. In this embodiment, the rotary member 31 driven by the drive shaft 30 forms the cutting blade assembly of the food chopper. The fluid pump 40 may comprise a first duct 41 extending through the housing 11 to ambient and a second duct 43 extending through the housing 11 into the collection bowl 80 for displacing fluid from ambient into the collection bowl 80 or from the collection bowl 80 into ambient.

In case of a fluid pump 40 arranged to displace liquid from a vessel such as a bowl to the ambient, the duct 43 may be extended with a detachable further duct (not shown) to have the duct inlet opening end near the bottom of the vessel, where the duct inlet opening of the detachable further duct may include a filter to prevent non-liquids pass into the duct. In the above embodiments, the kitchen appliance drive unit 10 comprises a drive shaft 30 to drive the rotary member 31 and fluid pump 40 where applicable. However, it should be understood that in alternative embodiments the drive shaft 30 may be omitted. For example, the rotary member 31 and/or fluid pump 40 may be driven by the electric motor 20 through a magnetic coupling or the like, in which case the rotary member 31 and/or fluid pump 40 may be made of or comprise portions of a magnetic material, with the drive mechanism, e.g the electric motor 20 or the hand-driven drive mechanism comprising portions of a magnetic material of opposite polarity, as is well-known per se in the art.

In the above embodiments, where reference is made to a fluid pump, it should be understood that this may be a pump for displacing liquids or a pump for displacing gases. In some embodiments, the fluid pump may be a liquid pump, which for instance may be used to supply a steady flow of an edible oil to a food product in order to reach an excellent consistency for a food product, e.g. for a pesto or other paste-like food products, which consistency is more difficult to achieve if such a liquid is manually added, e.g. added at once, during preparation of the food product. In another embodiment, the liquid pump may be configured to add a liquid during preparation of a food product in one go, e.g. to avoid disrupting the food processing by first chopping ingredients and subsequently adding oil or water for mixing. The liquid pump in other embodiments may be used for liquid extraction, which may be desirable e.g. when chopping a food product in order to extract water released by the food product as a result of the chopping, in order to reduce the wetness of the prepared food product.

In other embodiments the fluid pump may be a gas pump. For example, the gas pump may be fluidly connected to a gas cylinder, e.g. a CO₂ cylinder or the like, to deliver (pressurized) gases to a food product. Such a gas cylinder may be fitted to the housing 11 in any suitable manner, e.g. using a threaded engagement mechanism. Adding a specific gas to a food product container may be used to replace the air in a container by the specific gas (e.g. an inert gas) to reduce oxidation processes, e.g. by using a specific gas such as carbon dioxide or nitrogen.

The gas pump may be an air pump to suck air from a food product container, e.g. to provide vacuum suction, or to deliver (pressurized) air to a food product during its processing, e.g. to aerate, froth or foam the food product.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A kitchen appliance drive unit (10) comprising:
- a housing (11);
- a drive mechanism in the housing;
- a rotary member (31) driven by the drive mechanism;
- a first opening (13);
a second opening (15); and
- a fluid pump (40) driven by the drive mechanism and being fluidly connected to the first and second openings (13,15), the fluid pump (40) being arranged, in a first mode of operation, to displace a fluid from the first opening (13) to the second opening (15), **characterized in that** the fluid pump is also arranged, in a second mode of operation, to displace a fluid from the second opening (15) to the first opening (13).

2. The kitchen appliance drive unit of claim 1, wherein the drive mechanism comprises an electric motor (20).

3. The kitchen appliance drive unit (10) of claim 1 or 2, wherein the drive mechanism comprises a drive shaft (30) extending through the fluid pump (40), the fluid pump being driven by the drive mechanism via the drive shaft.

4. The kitchen appliance drive unit (10) of claim 3, wherein the fluid pump (40) is configurably coupled to the drive shaft (30) by a coupling member (37, 39) configurable between a first configuration in which the fluid pump is engaged with the drive shaft and a second configuration in which the fluid pump is disengaged from the drive shaft.

5. The kitchen appliance drive unit (10) of any of claims 1-4, further comprising a gear box (39) integral to the fluid pump (40), the drive shaft being coupled to the drive mechanism (10) via the gear box.

6. The kitchen appliance drive unit (10) of any of claims 1-5, wherein the housing (11) encloses the fluid pump (40) and comprises the first and second openings (13, 15).

7. The kitchen appliance drive unit (10) of any of claims 1-6, further comprising a directional control valve (45), wherein the first and second openings (13,15) are fluidly connected to the fluid pump (40) via the directional control valve (45).

8. The kitchen appliance drive unit (10) of any of claims 1-7, wherein the rotary member and at least one of the first and second openings (13,15) are arranged to interface with an attachment (60,60') to the drive unit (10).

9. The kitchen appliance drive unit (10) of any of claims 1-8, further comprising a user interface for selecting a fluid displacement direction of the fluid pump (40).

10. The kitchen appliance drive unit of any of claims 1-9, wherein the fluid pump (40) is a gas pump such as an air pump.

11. A kitchen appliance comprising a kitchen appliance drive unit (10), the drive unit (10) including:
- a housing (11);
- a drive mechanism in the housing (11);
- a rotary member (31) driven by the drive mechanism;
- a first opening (13);
- a second opening (15); and
- a fluid pump (40) driven by the drive mechanism and being fluidly connected to the first and second openings (13,15), wherein the fluid pump (40) is arranged to displace fluid from the first opening (13) to the second opening (15) in a first mode of operation, **characterized in that** the fluid pump is also arranged to displace fluid from the second opening (15) to the first opening (13) in a second mode of operation;
- a first and a second attachment (60,60') each having a drive unit interface (70) for interfacing with the drive unit (10), and a duct (90) extending from the drive unit interface (70) positionable within a food processing region (80), the arrangement being such that when the fluid pump (40) is in the second mode of operation and the drive unit interface (70) of the first attachment (60) is interfaced with the drive unit (10), the duct (90) communicates the first opening (13) with the food processing region (80) so that fluid is supplied along the duct (90) in a direction towards said food processing region (80) and, when the drive unit interface (70) of the second attachment (60') is interfaced with the drive unit (10), the duct (90) communicates the second opening (15) with the food processing region (80) so that fluid is drawn in a direction away from said food processing region (80) along the duct (90).

12. The kitchen appliance of claim 11, wherein the drive unit (10) and the first and second attachments (60,60') are arranged so that the second opening (15) is open to atmosphere when the drive unit interface (70) of the first attachment (60) is interfaced with the drive unit (10), and so that the first opening (13) is open to atmosphere when the drive unit interface (70) of the second attachment (60') is interfaced with the drive unit (10).

13. The kitchen appliance of claim 11 or 12, further comprising a unidirectional restrictor valve in said duct.

14. The kitchen appliance (60) of any of claims 11-13, wherein the kitchen appliance is a blender or a hand blender.

15. A kitchen appliance drive unit of any of claims 1-10, and an attachment, the attachment comprising:
- a drive unit interface (70) optionally including a further rotary member (75) for interfacing with the rotary member (31) of the kitchen appliance drive unit,
- a food product processing interface (80) optionally including a rotary food processing member (83) coupled to the further rotary member by a further drive shaft (77); and
- a duct (90) extending from the drive unit interface to the food product processing interface, wherein the duct is arranged to be fluidly coupled to one of said first and second openings (13,15).

## Patentansprüche

1. Küchengerätantriebseinheit (10), umfassend:
- ein Gehäuse (11);
- einen Antriebsmechanismus im Gehäuse;
- ein Drehelement (31), das von dem Antriebsmechanismus angetrieben wird;
- eine erste Öffnung (13);
- eine zweite Öffnung (15); und
- eine Fluidpumpe (40), die von dem Antriebsmechanismus angetrieben wird und mit der ersten und der zweiten Öffnung (13, 15) in Fluidverbindung steht, wobei die Fluidpumpe (40) in einem ersten Betriebsmodus angeordnet ist, um ein Fluid von der ersten Öffnung (13) zur zweiten Öffnung (15) zu verdrängen,
**dadurch gekennzeichnet, dass** auch die Fluidpumpe in einem zweiten Betriebsmodus angeordnet ist, um ein Fluid von der zweiten Öffnung (15) zur ersten Öffnung (13) zu verdrängen.

2. Küchengerätantriebseinheit nach Anspruch 1, wobei der Antriebsmechanismus einen Elektromotor (20) umfasst.

3. Küchengerätantriebseinheit (10) nach Anspruch 1 oder 2, wobei der Antriebsmechanismus eine Antriebswelle (30) umfasst, die sich durch die Fluidpumpe (40) erstreckt, wobei die Fluidpumpe durch den Antriebsmechanismus über die Antriebswelle angetrieben wird.

4. Küchengerätantriebseinheit (10) nach Anspruch 3, wobei die Fluidpumpe (40) mit der Antriebswelle (30) durch ein Kopplungselement (37, 39) konfigurierbar gekoppelt ist, das zwischen einer ersten Konfiguration, in der die Fluidpumpe mit der Antriebswelle in Eingriff steht und einer zweiten Konfiguration konfigurierbar ist, in der die Fluidpumpe von der Antriebswelle gelöst ist.

5. Küchengerätantriebseinheit (10) nach einem der Ansprüche 1-4, umfassend zudem ein Getriebe (39), das mit der Fluidpumpe (40) fest verbunden ist, wobei die Antriebswelle über das Getriebe mit dem Antriebsmechanismus (10) gekoppelt ist.

6. Küchengerätantriebseinheit (10) nach einem der Ansprüche 1-5, wobei das Gehäuse (11) die Fluidpumpe (40) umschließt und die erste und die zweite Öffnung (13, 15) umfasst.

7. Küchengerätantriebseinheit (10) nach einem der Ansprüche 1-6, umfassend zudem ein Richtungssteuerventil (45), wobei die erste und die zweite Öffnung (13, 15) über das Richtungssteuerventil (45) mit der Fluidpumpe (40) in Fluidverbindung stehen.

8. Küchengerätantriebseinheit (10) nach einem der Ansprüche 1-7, wobei das Drehelement und mindestens eine der ersten und zweiten Öffnungen (13, 15) so angeordnet sind, dass deren Zusatzgerät (60, 60') an die Antriebseinheit (10) angebunden ist.

9. Küchengerätantriebseinheit (10) nach einem der Ansprüche 1-8, umfassend zudem eine Benutzerschnittstelle zum Auswählen einer Fluidverdrängungsrichtung der Fluidpumpe (40).

10. Küchengerätantriebseinheit nach einem der Ansprüche 1-9, wobei die Fluidpumpe (40) eine Gaspumpe wie eine Luftpumpe ist.

11. Küchengerät umfassend eine Küchengerätantriebseinheit (10), wobei die Antriebseinheit (10) enthält:
- ein Gehäuse (11);
- einen Antriebsmechanismus im Gehäuse (11);
- ein Drehelement (31), das von dem Antriebsmechanismus angetrieben wird; - eine erste Öffnung (13);
- eine zweite Öffnung (15); und
- eine Fluidpumpe (40), die von dem Antriebsmechanismus angetrieben wird und mit der ersten und der zweiten Öffnung (13, 15) in Fluidverbindung steht, wobei die Fluidpumpe (40) angeordnet ist, um Fluid von der ersten Öffnung (13) zur zweiten Öffnung (15) in einem ersten Betriebsmodus zu verdrängen, **dadurch gekennzeichnet, dass** die Fluidpumpe auch angeordnet ist, um Fluid von der zweiten Öffnung (15) zur ersten Öffnung (13) in einem zweiten Betriebsmodus zu verdrängen;
- ein erstes und ein zweites Zusatzgerät (60,60'), jeweils aufweisend eine Antriebseinheitsschnittstelle (70) für die Anbindung an die Antriebseinheit (10) und eine Leitung (90), die sich von der Antriebseinheitsschnittstelle (70) aus erstreckt, die innerhalb einer Lebensmittelverarbeitungsregion (80) positioniert werden kann, wobei die Anordnung so ist, dass die Leitung (90), wenn sich die Fluidpumpe (40) im zweiten Betriebsmodus befindet und die Antriebseinheitsschnittstelle (70) des ersten Zusatzgeräts (60) an die Antriebseinheit (10) angebunden ist, die erste Öffnung (13) mit der Lebensmittelverarbeitungsregion (80) in Kommunikation platziert, so dass das Fluid entlang der Leitung (90) in Richtung der Lebensmittelverarbeitungsregion (80) zugeführt wird und wenn die Antriebseinheitsschnittstelle (70) des zweiten Zusatzgeräts (60') an die Antriebseinheit (10) angebunden ist, platziert die Leitung (90) die zweite Öffnung (15) in Kommunikation mit der Lebensmittelverarbeitungsregion (80), so dass Fluid in eine Richtung wegführend von der Lebensmittelverarbeitungsregion (80) entlang der Leitung (90) gezogen wird.

12. Küchengerät nach Anspruch 11, wobei die Antriebseinheit (10) und das erste und das zweite Zusatzgerät (60, 60') so angeordnet sind, dass die zweite Öffnung (15) zur Atmosphäre hin offen ist, wenn die Antriebseinheitsschnittstelle (70) des ersten Zusatzgeräts (60) an die Antriebseinheit (10) angebunden ist, und so dass die erste Öffnung (13) zur Atmosphäre hin offen ist, wenn die Antriebseinheitsschnittstelle (70) des zweiten Zusatzgeräts (60') an die Antriebseinheit (10) angebunden ist.

13. Küchengerät nach Anspruch 11 oder 12, umfassend zudem ein unidirektionales Drosselventil in der Leitung.

14. Küchengerät (60) nach einem der Ansprüche 11-13, wobei das Küchengerät ein Mixer oder ein Stabmixer ist.

15. Küchengerätantriebseinheit nach einem der Ansprüche 1-10 und ein Zusatzgerät, wobei das Zusatzgerät umfasst:
- eine Antriebseinheitsschnittstelle (70), die optional ein weiteres Drehelement (75) zum Anbinden an das Drehelement (31) der Küchengerätantriebseinheit enthält,
- eine Lebensmittelverarbeitungsschnittstelle (80), die optional ein Lebensmittelverarbeitungsdrehelement (83) enthält, das mit dem weiteren Drehelement durch eine weitere Antriebswelle (77) gekoppelt ist; und
- eine Leitung (90), die sich von der Antriebseinheitsschnittstelle zur Lebensmittelverarbeitungsschnittstelle erstreckt, wobei die Leitung so angeordnet ist, dass sie mit einer der ersten und zweiten Öffnungen (13, 15) in Fluidkopplung steht.

## Revendications

1. Unité de commande (10) pour appareil ménager comprenant :
- un logement (11) ;
- un mécanisme de commande dans le logement ;
- un organe rotatif (31) commandé par le mécanisme de commande ;
- une première ouverture (13) ;
- une seconde ouverture (15) ; et
- une pompe à fluide (40) commandée par le mécanisme de commande et étant reliée fluidiquement aux première et seconde ouvertures (13, 15), la pompe à fluide (40) étant disposée, dans un premier mode de fonctionnement, pour déplacer un fluide de la première ouverture (13) à la seconde ouverture (15), **caractérisée en ce que** la pompe à fluide est aussi disposée, dans un second mode de fonctionnement, pour déplacer un fluide de la seconde ouverture (15) vers la première ouverture (13).

2. Unité de commande pour appareil ménager selon la revendication 1, dans laquelle le mécanisme de commande comprend un moteur électrique (20).

3. Unité de commande (10) pour appareil ménager selon la revendication 1 ou 2, dans laquelle le mécanisme de commande comprend un arbre de commande (30) se prolongeant à travers la pompe à fluide (40), la pompe à fluide étant commandée par le mécanisme de commande via l'arbre de commande.

4. Unité de commande (10) pour appareil ménager selon la revendication 3, dans laquelle la pompe à fluide (40) est couplé de manière configurable à l'arbre de commande (30) par un organe de couplage (37, 39) configurable entre une première configuration, dans laquelle la pompe à fluide se met en prise avec l'arbre de commande, et une seconde configuration, dans laquelle la pompe à fluide se désengage de l'arbre de commande.

5. Unité de commande (10) pour appareil ménager selon l'une quelconque des revendications 1-4, comprenant de plus une boîte à engrenages (39) solidaire de la pompe à fluide (40), l'organe de commande étant couplé au mécanisme de commande (10) via la boîte à engrenages.

6. Unité de commande (10) pour appareil ménager selon l'une quelconque des revendications 1-5, dans laquelle le logement (11) renferme la pompe à fluide (40) et comprend les première et seconde ouvertures (13, 15).

7. Unité de commande (10) pour appareil ménager selon l'une quelconque des revendications 1-6, comprenant de plus un distributeur (45), dans laquelle les première et seconde ouvertures (13, 15) sont reliées fluidiquement à la pompe à fluide (40) via le distributeur (45).

8. Unité de commande (10) pour appareil ménager selon l'une quelconque des revendications 1-7, dans laquelle l'organe rotatif et au moins une des première et seconde ouvertures (13, 15) sont disposés pour s'interfacer avec une fixation (60, 60') à l'unité de commande (10).

9. Unité de commande (10) pour appareil ménager selon l'une quelconque des revendications 1-8, comprenant de plus une interface utilisateur pour sélectionner une direction de déplacement de fluide de la pompe à fluide (40).

10. Unité de commande pour appareil ménager selon l'une quelconque des revendications 1-9, dans laquelle la pompe à fluide (40) est une pompe à gaz telle qu'une pompe à air.

11. Appareil ménager comprenant une unité de commande (10) pour appareil ménager, l'unité de commande (10) incluant :
- un logement (11) ;
- un mécanisme de commande dans le logement (11) ;
- un organe rotatif (31) commandé par le mécanisme de commande ; - une première ouverture (13) ;
- une seconde ouverture (15) ; et
- une pompe à fluide (40) commandée par le mécanisme de commande et étant reliée fluidiquement aux première et seconde ouvertures (13, 15), dans lequel la pompe à fluide (40) est disposée pour déplacer le fluide de la première ouverture (13) à la seconde ouverture (15) dans un premier mode de fonctionnement, **caractérisé en ce que** la pompe à fluide est aussi disposée pour déplacer le fluide de la seconde ouverture (15) à la première ouverture (13) dans un second mode de fonctionnement ;
- une première et une seconde fixation (60, 60') comportant chacune une interface (70) d'unité de commande pour s'interfacer avec l'unité de commande (10), et un conduit (90) se prolongeant de l'interface (70) d'unité de commande pouvant être positionné à l'intérieur d'une zone de transformation (80) d'aliments, la disposition étant telle que lorsque la pompe à fluide (40) se trouve dans le second mode de fonctionnement et l'interface (70) d'unité de commande de la première fixation (60) est interfacée avec l'unité de commande (10), le conduit (90) met en communication la première ouverture (13) avec la zone de transformation (80) d'aliment de sorte que le fluide est alimenté le long du conduit (90) dans une direction orientée vers ladite zone de transformation (80) d'aliments et, lorsque l'interface (70) d'unité de commande de la seconde fixation (60') est interfacée avec l'unité de commande (10), le conduit (90) met en communication la seconde ouverture (15) avec la zone de transformation (80) d'aliments de sorte que le fluide soit soutiré dans une direction éloignée de ladite zone de transformation (80) d'aliments le long du conduit (90).

12. Appareil ménager selon la revendication 11, dans lequel l'unité de commande (10) et les première et seconde fixations (60, 60') sont disposées de sorte que la seconde ouverture (15) est ouverte vers l'atmosphère lorsque l'interface (70) d'unité de commande de la première fixation (60) est interfacée avec l'unité de commande (10), et de sorte que la première ouverture (13) soit ouverte vers l'atmosphère lorsque l'interface (70) d'unité de commande de la seconde fixation (60') est interfacée avec l'unité de commande (10).

13. Appareil ménager selon la revendication 11 ou 12, comprenant de plus un robinet restricto-changeur unidirectionnel dans ledit conduit.

14. Appareil ménager (60) selon l'une quelconque des revendications 11-13, dans lequel l'appareil ménager est un mélangeur ou un mélangeur manuel.

15. Unité de commande pour appareil ménager selon l'une quelconque des revendications 1-10, et une fixation, la fixation comprenant :
- une interface (70) d'unité de commande incluant éventuellement un organe rotatif (75) supplémentaire pour s'interfacer avec l'organe rotatif (31) de l'unité de commande pour appareil ménager,
- une interface de transformation (80) du produit alimentaire incluant éventuellement un organe de transformation (83) d'aliments rotatif couplé à l'organe rotatif supplémentaire par un arbre de commande (77) ; et
- un conduit (90) se prolongeant de l'interface d'unité de commande vers l'interface de transformation du produit alimentaire, dans laquelle le conduit est disposé pour être couplé fluidiquement à une desdites première et seconde ouvertures (13, 15).
